Europäisches Patentamt

European Patent Office

Office européen des brevets

(19)

(11) EP 0 969 229 A2

(12) EUROPEAN PATENT APPLICATION

(43) Date of publication:
05.01.2000 Bulletin 2000/01

(51) Int Cl.7: F16H 61/00

(21) Application number: 99305090.5

(22) Date of filing: 29.06.1999

(84) Designated Contracting States:
AT BE CH CY DE DK ES FI FR GB GR IE IT LI LU
MC NL PT SE
Designated Extension States:
AL LT LV MK RO SI

(30) Priority: 30.06.1998 JP 18526598

(71) Applicant: ISUZU MOTORS LIMITED
Shinagawa-ku, Tokyo (JP)

(72) Inventor: Inoue, Eiji, c/o Isuzu Motors Limited
Fujisawa-shi, Kanagawa (JP)

(74) Representative: Jenkins, Peter David et al
PAGE WHITE & FARRER
54 Doughty Street
London WC1N 2LS (GB)

(54) Continuously variable transmission system

(57) The invention provides an information processing apparatus having an image pickup apparatus incorporated therein, said image pickup apparatus comprising image pickup means for picking up an image of an object, holding means for holding thereon a lens for forming an image on said image pickup means, said holding means having a serrated circumferential portion thereon, moving means for fitting with said serrated circumferential portion of said holding means to move, when said moving means is turned, said holding means along a direction of an optical axis of said lens and accommodation means for accommodating said holding means and said moving means therein. With the information processing apparatus, the holding means is moved in a direction of the optical axis of the lens by turning the moving means. Consequently, the focus of the lens can be adjusted to the object.

F I G. 1

**Description**

The present invention relates to a continuously variable transmission system having infinitely variable speed-ratio function as well as clutch function, which is incorporated in a power train to transmit the torque of an engine to an output shaft.

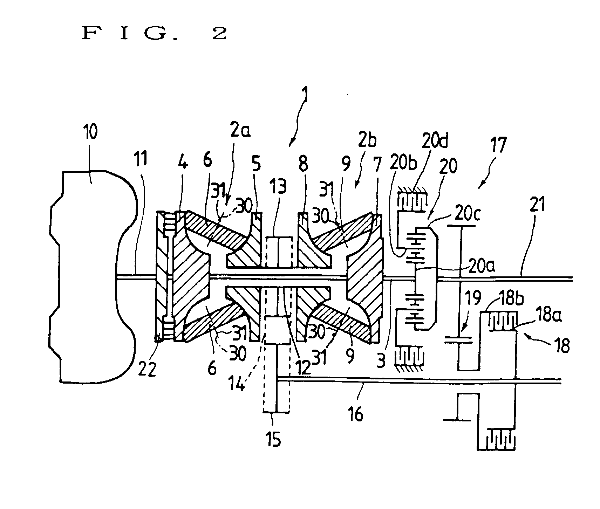

Some land vehicles having an engine, conventionally, use a continuously variable transmission system, which changes infinitely the engine speed and torque to an output speed and torque, which are in turn transmitted to an output shaft. Most continuously variable transmission systems, as shown in FIG. 2, are comprised of a continuously variable transmission unit 1 applied with the power of the engine through a torque converter 10 and an input shaft 11, a clutch unit 17 for changing the output power from the continuously variable transmission unit 1 to either forward or reverse to get the desired vehicle running operation, and an output shaft 21 for transmitting the output power from the clutch unit 17.

The continuously variable transmission unit 1 is of a toroidal type, which includes plural toroidal transmission sets arranged on the same centerline. The toroidal transmission unit what is called as double cavity type is in general well known, in which two sets of toroidal transmissions 2a, 2b are juxtaposed in axially aligned relation.

The toroidal transmission set 2a in the continuously variable transmission unit 1 comprises the input shaft 11 applied with the torque from the output of the engine through the torque converter 10, an input disc member 4 having a toroidal surface and driven by the input shaft 11, an output disc member 5 having a toroidal surface and arranged confronting the input disc member 4, and a pair of power rollers 6 disposed between the input and output disc members 4, 5 so as to make frictional engagement with the confronting toroidal surfaces. Another toroidal transmission set 2b includes an input disc member 7 driven by the input shaft 11 through a mainshaft 3, an output disc member 8 arranged confronting the input disc member 7, and a pair of power rollers 9 arranged between the confronting disc members so as to make frictional contact with the toroidal surfaces.

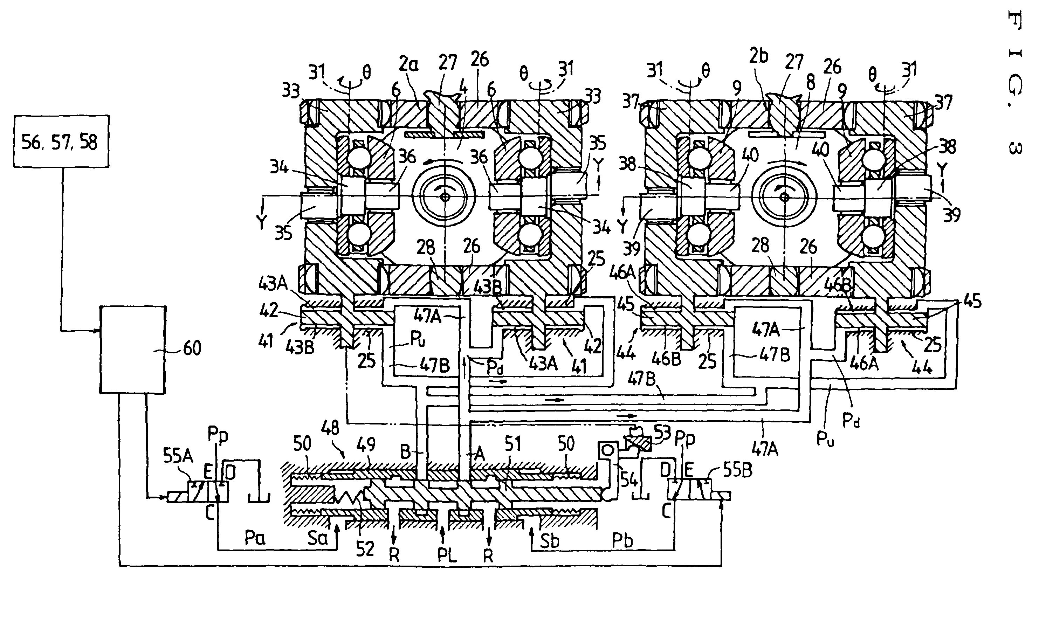

The power rollers 6, 9, as shown in FIG. 3, are supported by trunnions 33, 37 for rotation and pivoting motion. The input disc members 4, 7 are mounted on the mainshaft 3 for axial movement, but against rotation with respect to the mainshaft 3. The input disc member 4 is forced against the power rollers 6 by the cam action of a loading cam 22 on the end of the input shaft 11. The resultant reaction thrusts the input disc member 7 against the power rollers 9. The power rollers 6, 9 are each for pivoting motion about its associated pivotal axis 31 that is normal to its associated rotational axis 30, normal to the plane surface of this paper, so that the rotation of the input disc members 4, 7 is varied infinitely in speed in accordance with pivoting angles of the power rollers 6, 9 about the pivotal axes 31.

The output disc members 5, 8 of the toroidal transmission sets 2a, 2b are commonly connected to an output shaft 12 of the toroidal transmission unit 2 and, therefore, the rotation of the output shaft 12 is applied to the output shaft 21 of the continuously variable transmission in reversed rotation through the clutch unit 17. The rotation of the output shaft 12 of the continuously variable transmission unit 1 is transmitted to a sprocket wheel 15 on a countershaft 16 from a sprocket wheel 13 on the output shaft 12 through a chain and sprocket drive 14. The countershaft 16 is the drive shaft at the output end of the continuously variable transmission unit 1. The driving force transmitted to the countershaft 16 may be applied to the output shaft 21 of the continuously variable transmission through a forward clutch 18 and a speed-reduction gear 19 in the clutch unit 17. The forward clutch 18 is of a multi-plate clutch having input clutch members 18a connected to the countershaft 16, and output clutch members 18b connected to the speed-reduction gear 19 and allowed to engage with the input clutch members 18a. The output shaft 21 is connected with driving means such as driving wheels of the vehicle. Upon engaging the forward clutch 18, the output shaft 21 turns forwards with respect to the rotational sense of the input shaft 11.

In contrast, the rotation of the input shaft 11 is transmitted backward to the output shaft 21 through a planetary gearset 20 with a reverse clutch 20d in the clutch unit 17. The planetary gearset 20 with reverse clutch is comprised of a sun gear 20a connected to the main shaft 3, an internal gear 20c connected to the output shaft 21, planet gears 20b meshed with both the sun gear 20a and the internal gear 20c and permitted for or locked against rotation by engagement/disengagement of the reverse clutch 20d. When the forward clutch 18 is engaged while the planetary gearset 20 with reverse clutch is held in neutral, the countershaft 16 turns forwards. In contrast, to get reverse motion, the forward clutch is disengaged and the planetary gearset 20 with reverse clutch is actuated.

Referring to the relation of the shift lever manipulation with the transmission and clutch operation, with the shift lever in Drive, the forward clutch is thrown into engagement while the planetary gearset 20 with the reverse clutch is held in neutral. In this event, the vehicle runs forwards and the speed ratio of the continuously variable transmission 1 may be controlled in accordance with the engine operating conditions such as engine rpm, vehicle speed, engine load and the like. In contrast, with the shift lever in Reverse, the planetary gearset 20 with the reverse clutch is thrown in the operating phase while the forward clutch is disengaged. Further, with the shift lever in Neutral, the forward clutch 18 and the planetary gearset 20 with the reverse clutch are concurrently held in neutral and, therefore, no torque is transmitted to the output shaft 21.

As shown in FIG. 3, the pivoting or swinging motion of the power rollers 6, 9 about pivotal axes 31 may be causes by making the power rollers 6, 9 shift along the axial direction of the pivotal axes 31. In neutral position where the pivotal axes 31 of the power rollers 6, 9 intersect with the axis of the mainshaft 3, the power rollers 6, 9 are kept at their pivot angles θ for the neutral position, thereby keeping the speed ratio at this event. If the trunnions 33, 37 are moved together with the power rollers 6, 9 during torque transmission along the axial direction of the axes 31, the rolling-contact locations of the power rollers 6, 9 with the input and output disc members 4, 7 and 5, 8 are deviated from the contact locations at the neutral position. As a result, the power rollers 6, 9 are subjected to the pivoting forces applied from the disc members 4, 7 and 5, 8 so as to pivot on their pivotal axes 31 with the direction and velocity, which depend on the direction and amount of their deviations along the pivotal axes 31. The paired trunnions 33, 37 are supported by yokes 26, which are rotatable about the posts 27, 28, so as to keep an inter-axis distance between the paired pivotal axes. The trunnions 33, 37 are fitted in the yokes 26 for rotation as well as pivoting motion through needle bearings and spherical bearings.

A hydraulically operated speed-ratio controller in the continuously variable transmission carries out the control of the pivoting motion of the power rollers 6, 9 in the toroidal continuously variable transmission unit 1. The pivoting motion of the power rollers 6, 9 is controlled so as to achieve the desired speed ratio, as will be described hereinafter, by regulating the axial shift of the pivotal axes of the trunnions 33, 37. Each of the paired power rollers 6, 9 is supported for rotation by its associated journal 34, 38 that has a pin 36, 40 eccentric with respect to a rotating shaft 35, 39, which is mounted in the associated trunnion 33, 37 for rotation as well as pivoting motion. Moreover, the trunnions 33, 37 are mounted to a casing of the transmission for linear movement along the axial direction of the pivotal axes 31 and also for pivoting motion about the pivotal axes 31.

The trunnion pairs 33, 37 are provided at their pivotal axes 31 with hydraulic actuators 41, 44, respectively. The actuator 41 has a piston 42 fixed to the trunnion 33 while another actuator 44 has a piston 35 fixed to the trunnion 37. A casing 25 has two cylinder chambers of a deceleration cylinder chamber 43a and an acceleration cylinder chamber 43b, which are divided by the piston 42 from each other. Another casing 25 also has a deceleration cylinder chamber 46a and an acceleration cylinder chamber 46b, which are divided by the piston 45 from each other.

The control valve for governing the speed ratio of the continuously variable transmission system is of a sliding-spool valve 48, which has an inlet port PL communicating to a hydraulic pressure source, a port A communicating to the deceleration cylinder chamber 43A through a hydraulic line 47A, a port B communicating to the acceleration cylinder chamber 43B through a hydraulic line 47B, and two ports R communicated to a oil reservoir. The sliding-spool valve 48 further has a sleeve 49 arranged for sliding movement in a valve case, and a spool 51 fitted for sliding movement in the sleeve 49. The sleeve 49 is forced with springs 50 at the opposite ends thereof while hydraulic pressures Pa, Pb are respectively applied to ports Sa, Sb at the opposite ends of the sliding-spool valve 48 through solenoid-operated valves 55A, 55B, so that the sleeve 49 is controlled in its position in proportion to the desired speed ratio.

The pivotal axes 31 are each connected at its ends with a precessional cam 53, against which is abutted one end of a lever 54 pivoted at the midway point thereof. The lever 54 is further abutted against at the opposite end thereof against one axial end of the spool 51 in the sliding-spool valve 48. The spool 51 is biased by a spring 52 arranged between the opposite end thereof and the valve casing. The precessional cam 15 is to detect the resultant deviation amount of the axial-linear shift Y as well as the angular shift θ of its associated pivotal axis 31 of the trunnion 33. The position of the spool 51 is subjected to the feed-back control in matching with the position of the sleeve 49 that has been shifted dependent on the desired speed ratio.

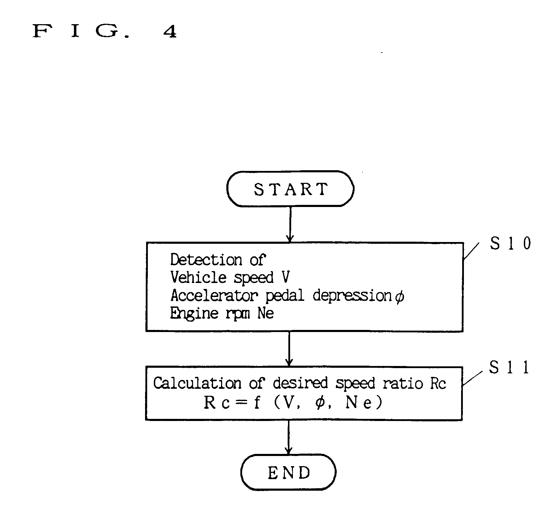

The controller unit 60 is applied with signals reported from various sensors such as a vehicle speed sensor 56, accelerator sensor 57, engine rpm sensor 58 and the like. The controller unit 60 calculates the desired speed ratio in accordance with information signals as to the speed ratio such as engine rpm, accelerator pedal depression, vehicle speed or the like monitored by the associated sensors, and outputs duty signals for control signals to the solenoid 55A, 55B. Next, referring FIG. 4 showing a flowchart of the procedure to be executed in the controller unit 60 to find a desired speed ratio Rc, the vehicle speed V, accelerator pedal depression φ, and engine rpm Ne are found at step 10 (S10) directly from the sensors, or indirectly by calculation based on the detected values.

The desired speed ratio Rc is found at step 11 (S11), based on a function f previously defined as to variables of the operating information described just above. The accelerator sensor 57 may monitors either the accelerator pedal depression or the throttle position.

The controller unit 60 controls the sleeve 49 so as to position the sleeve 49 in accordance with the desired speed ratio, which has been calculated based on the engine operating conditions detected by the various sensors. That is to say, the solenoid-operated valves 55A, 55B control a differential pressure ΔP between the hydraulic pressures Pa, Pb applied to the ports Sa, Sb of the sliding-spool valve 48 so as to become the value corresponding to the desired speed ratio, whereby the sleeve 49 in the sliding-spool valve 48 is forcibly moved to the position where the differential pressure ΔP obtained is made to balance with the spring force of the springs 50 arranged at the opposite ends of the sleeve 49. The hydraulic pressures Pa, Pb may be controlled by pulse-width modulation control signals having duty A and duty B, respectively, applied to the solenoid-operated valves 55A, 55B from the controller unit 60. Selectively connecting any one of a drain port D connected to the reservoir and a pilot port E connected to a pilot-pressure generating circuit with an output port C in the solenoid-operated valves 55A, 55B is changed over dependent on duty ratio, whereby the average opening degree in the solenoid-operated valves 55A, 55B may be controlled so that the hydraulic pressures Pa, Pb at the output port C may be taken out from a pilot pressure Pp in accordance with the duty A and duty B. What is referred to as "duty" here means the ratio of the pulse width (duration of "ON") to the pulse-repeated cycles in the pulse-width modulation control. That is to say, the duty (%) is given by

$$duty = (duration\ of\ "ON"\ of\ solenoid\ /operating\ cycles\ of\ solenoid) \times 100$$

For example, to vary the speed ratio with acceleration from the speed ratio where the trunnions 33, 37 are in the neutral, the calculated duty A and duty B are signaled to the solenoid-operated valves 55A, 55B, whereby the relation between the hydraulic pressures Pa, Pb acting on the opposite ends of the sliding-spool valve 48 becomes Pa > Pb, resulting in moving the sleeve 49 rightward in the drawing. As the result of this rightward movement of the sleeve 49, the hydraulic pressure source communicates with the hydraulic line 47B through the port PL while the hydraulic line 47A communicates the reservoir through the port R, whereby the hydraulic pressure Pu in the hydraulic line 47B connected with the acceleration cylinder chambers 43B, 46B exceeds the hydraulic pressure Pd in the hydraulic line 47A connected with the deceleration cylinder chambers 43A, 46A, that is, Pu > Pd. The consequent differential pressure between the cylinder chambers 43A, 43B causes the left-hand trunnion having the minus amount Y of the axial-linear shift of its pivotal axis, or the trunnion 33, to move upwards, whereas the right-hand trunnion 37 in FIG. 3 moves upwards. At this event, the trunnions 33, 37 start to pivot or turn about the pivotal axes to the direction of minus angular shift $\theta$ in accordance with the pivoting characteristic of the power rollers 6, 9 ($\theta$ < 0, the lower roller in FIG.2 of the toroidal transmission set 2a and the upper roller of the toroidal transmission set 2b make counterclockwise rotation and the residual rollers rotate clockwise), thereby beginning to vary the speed ratio with acceleration.

As the trunnions 33, 37 continue to turn about their pivotal axes, more rightward movement of the spool 51 causes to reverse the differential pressure between the pressure Pd in the hydraulic line 47A and the pressure Pu in the hydraulic line 47B. That is to say, the hydraulic pressure in the hydraulic pressure source applied to the port L has an action on the deceleration cylinder chamber 43A and, on the other hand, the hydraulic line 47B connected to the acceleration cylinder chamber 43B communicates the reservoir, whereby the trunnions 33, 37 are reversed in directions of their axial-linear shifts. The instant the amount Y of the axial-linear shift turns positive value, the trunnions 33, 37 start to pivot towards the direction to cause the deceleration. The operating sequence for varying the speed ratio repeats until the speed ratio converges on the desired speed ratio at which the amount Y of the axial-linear shift of the trunnions 33, 37 becomes zero with the completion of the operation for varying the speed ratio and the sleeve 49 is positioned in matching with the spool 51 whereby the supply of the working oil to the hydraulic actuator 41 ceases.

Under some conditions, as in ascending or descending steep grades, most automotive transmissions including the continuously variable transmissions select less speed ratios, or low-speed ranges such as the 1st-, 2nd-forward speed, to thereby obtain more driving torque or more engine braking. When running from the level pavement to the descending road and then to the level pavement again, the shift lever is naturally enough manipulated from Drive to the selected position by way of Neutral. In order to prevent a sudden surge in vehicle speed that might take into action when the shift lever in Neutral is thrown to Drive, a system is commonly employed, in which the same speed-ratio control as in Drive is done during in Neutral.

Nevertheless, the above system involves the following problem (1) to (3):

(1) When running with the shift lever in Neutral, the engine rpm almost becomes different, compared with the shift lever in Drive and, therefore, the instant the shift lever is manipulated from Neutral to Drive, the forward clutch should be engaged with absorbing the difference in rotational speed between the clutch members to be engaged, resulting in reducing in durability of the clutch;
(2) When running with the shift lever in Neutral, especially, driver does not usually press the accelerator pedal down and, therefore, the engine operates at low rpm. This results in less delivery amount as well as less pressure of an oil pump serving as a hydraulic pressure source for engagement of the clutch. Under such operating condition, the shift lever manipulation from Neutral to Drive with the vehicle moving at high speed results in remarkably increasing the energy to be absorbed by the clutch unit, thereby causing the troubles such as the sticking of the the clutch facings; and
(3) On manipulation of the shift lever from Neutral to Drive, the clutch causes the shock when absorbing the difference in rotational speed between clutch member whereby the driver feels uncomfortable sudden surge in vehicle speed.

Meanwhile, Japanese Patent Publication No.30523/1996 discloses a toroidal, continuously variable transmission in which a toroidal, continuously variable transmission unit is followed by a forward clutch unit and a reverse clutch unit. Engaging either of the forward and reverse clutch units allows taking any of froward and reverse rotations out of the output shaft.

Japanese Patent Laid-Open No.166195/1997 is a power transmitting apparatus provided with a toroidal, continuously variable transmission unit, which relates to a toroidal, continuously variable transmission of a double-cavity type and comprises output discs connected with each other through a connecting member fixed to an output gear, a reverse mechanism for turn backwards the rotation of the output gear and transmitting the consequent reverse rotation to an output shaft, a forward clutch unit for selectively bring the reverse mechanism into any one of idling and torque transmitting phases, a planetary gearset arranged between input and output shafts so as to transmitting in reverse the rotation of the input shaft to the output shaft, a reverse brake unit selectively bring the planetary gearset into any one of idling and torque transmitting phases, and a power-take-off output gear fixed to the input shaft thereby allowing to take the power of the engine out of the power-take-off output gear.

The present invention has for its primary aim to overcome the problems in the prior art as described just above and in particular to provide a continuously variable transmission system in which, when the shift lever is manipulated from Neutral to Drive with the vehicle in moving, there is no need of absorbing the difference in rotational speed between the input clutch member of the clutch unit applied with the engine rotation from the continuously variable transmission unit and the output clutch member connected to the drive wheels of the vehicle, whereby the exertion on the clutch is made less and the shock happening at the engagement is reduced, and when the shift lever is in Neutral with the vehicle in moving, the speed ratios of the continuously variable transmission set are controlled such that a difference in rotational speed between the input clutch member and the output clutch member in the clutch unit becomes substantially zero.

The present invention is concerned with a continuously variable transmission system comprising an input shaft applied with a torque from an engine, at least one continuously variable transmission set for varying infinitely a rotation of the input shaft and transmitting the varied rotation to output-end driving shaft, a clutch unit composed of an input clutch member connected to the output-end driving shaft of the continuously variable transmission set and an output clutch member allowed to make an engagement with the input clutch member thereby connect and disconnect a power train from the continuously variable transmission set, an output shaft connected to the output clutch member of the clutch unit for providing transmitting an output torque, and means for controlling speed ratios of the continuously variable transmission set in response to manipulations of a shift lever, wherein the means controls the speed ratios of the continuously variable transmission set such that a difference in rotational speed between the input clutch member and the output clutch member in the clutch unit becomes substantially zero in compliance with the shift lever in neutral.

In one aspect of the present invention, the control means finds a rotational frequency of the input clutch member in the clutch unit in accordance with output signals from an engine rpm sensor and the speed ratios of the continuously variable transmission set, and further finds a rotational frequency of the output clutch member in accordance with output signals from a vehicle speed sensor.

In another aspect of the present invention, the continuously variable transmission set is of a toroidal, continuously variable transmission set composed of an input and output disc members confronting each other, a pair of power rollers pivoting with respect to the disc members to thereby vary infinitely a rotation of the input disc member and transmit the consequent varied rotation to the output disc member, a pair of trunnions supporting the power rollers, one to each trunnion, and making it possible to pivot about their pivoting axes, a hydraulic cylinder having two cylinder chambers and causing the trunnions to shift in a direction of the pivoting axes, a control valve for regula³ing hydraulic pressures to the cylinders, and a pair of solenoid-operated valves for controlling pilot pressures acting on the opposite ends of the control valve.

On the control means in the continuously variable transmission system constructed as described above, the speed ratios are controlled such that a difference in rotational speed between an input clutch member and an output clutch member becomes substantially null in compliance with a shift lever in neutral. Thus, when the shift lever is manipulated to Drive from Neutral to engage the clutch to thereby establish the power train from the continuously variable transmission system to the output shaft, there is no need of absorbing the impact owing to the difference in rotational speed between the input and output disc members. This lessens the wear of the clutch facings as well as the shock that might happen on engagement of the clutch.

According to the continuously variable transmission system of this invention, on the shift lever manipulation from Neutral to Drive with the vehicle moving, the difference in rotational speed between the input and output disc members of the forward clutch is substantially zero whereby the clutch is improved in the durability and protected from the shock when engaged.

Other aims and many of the attendant advantages of this invention will be readily appreciated as the apparatus becomes better understood by reference to the following detailed description when considered in connection with the accompanying drawings.

FIG. 1 is a flow sheet illustrating a processing to find a desired speed ratio in accordance with shift lever manipulation:

FIG. 2 is a schematic illustration showing an exemplary prior toroidal, continuously variable transmission system of double cavity type:

FIG. 3 is a schematic illustration showing a speed-ratio control mechanism of speed-ratio control valve means incorporated with the toroidal transmission sets in the continuously variable transmission system in FIG. 2: and

FIG. 4 is a flowchart illustrating operating steps to find the desired speed ratio in the prior toroidal, continuously variable transmission system.

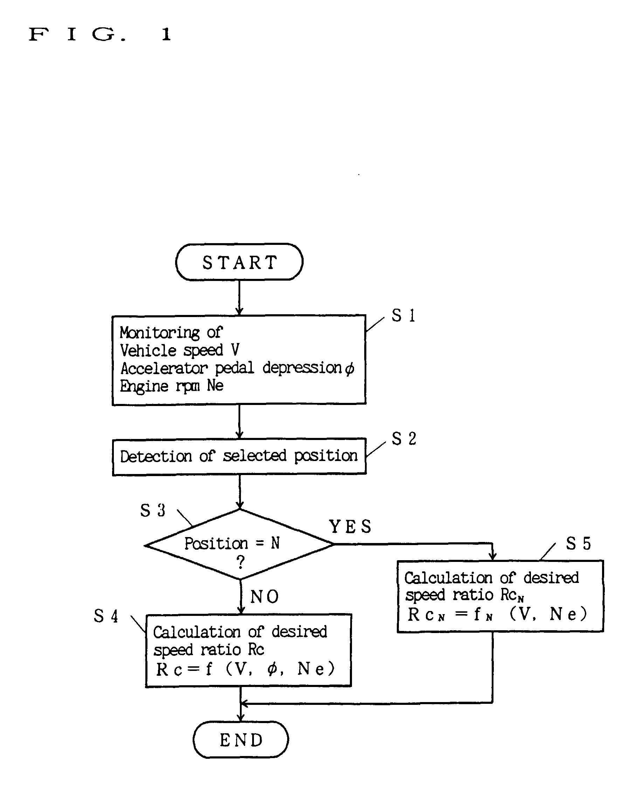

An embodiment of the continuously variable transmission system according to the present invention will be explained below with reference to the accompanying drawings. The continuously variable transmission system of this invention is composed of the toroidal, continuously variable transmission sets and clutch unit shown in FIGS. 1 and 2. Thus, similar reference characters designate similar elements or components in the following description, and the previous description will be applicable.

As shown in FIG. 1, the continuously variable transmission system of this invention is operated along the following steps (from S1 to S5).

Vehicle running conditions for the speed-ratio control are reported from sensors equipped on the vehicle (S1). The vehicle running conditions to be reported are vehicle speed V, accelerator pedal depression $\phi$, and engine rpm Ne.

Next, the recent position of a shift lever is detected (S2).

Whether the position is in Neutral is identified (S3).

If the position is not in Neutral at (S3), the desired speed ratio Rc is calculated from a function f of the vehicle speed V, accelerator pedal depression $\phi$, and engine rpm Ne, which is given by

$$Rc = f\,(V, \phi, Ne) \tag{S4}.$$

The desired speed ratio is found, based on not only the speed information as to vehicle speed V and engine rpm Ne but also the engine load.

If the position is in Neutral at (S3), the desired speed ratio $Rc_N$ is calculated from a function $f_N$ of the vehicle speed V and engine rpm Ne, which is given by

$$Rc_N = f_N\,(V, Ne) \tag{S5}.$$

Although the function $f_N$ is calculated from the detected values as having been already described, it may be previously stored in the controller unit as a lookup table.

As apparent from the above, when the shift lever is thrown in neutral as the vehicle runs, the speed ratio of the continuously variable transmission unit 1 is determined, based on the engine rpm Ne and the vehicle speed V, such that the difference of rotational speed between the input clutch member 18a and the output clutch member 18b of the forward clutch 18 in the clutch unit 17 becomes zero. Namely, the rotational frequency of the input clutch member 18a of the forwards clutch 18 is calculated in accordance with the engine rpm Ne, whereas the rotational frequency of the output clutch member 18b is found from the vehicle speed V, or the gear ratio of the speed-reduction gears.

As a result, even when the shift lever is manipulated from Neutral to Drive where the forward clutch 18 is in engagement to transmit the torque, the consequent impact energy may be made remarkably less, which must be absorbed by the forward clutch 18. This makes wear of clutch facings less, resulting in prolonging their acceptable service life, while causes no problem as to the shock or the like upon engagement of the clutch. After the engagement of the forward clutch 18, the normal control in Drive is restored to provide varying the desired speed ration. In this event, most continuously variable transmissions limits the vehicle speed below a prescribed speed, or takes the so-called slow speed-ratio control and, therefore, the driver feels a light acceleration or deceleration with no uncomfortable surge in vehicle speed.

As the present invention may be embodied in several forms without departing from the spirit of essential characteristics thereof, the present embodiment is therefore illustrative and not restrictive, since the scope of the invention is defined by the appended claims rather than by the description preceding them, and all changes that fall within meets and bounds of the claims, or equivalent of such meets and bounds are therefore intended to embraced by the claims.

**Claims**

1. A continuously variable transmission system comprising an input shaft(11) applied with a torque from an engine, at least one continuously variable transmission set(1) for varying infinitely a rotation of the input shaft(11) and transmitting the varied rotation to output-end driving shaft(16), a clutch unit(17) composed of an input clutch member(18a) connected to the output-end driving shaft(16) of the continuously variable transmission set(1) and an output clutch member(18b) allowed to make an engagement with the input clutch member(18a) thereby connect and disconnect a power train from the continuously variable transmission set(1), an output shaft(12) connected to the output clutch member(18b) of the clutch unit(1) for providing transmitting an output torque, and means for controlling speed ratios of the continuously variable transmission set(1) in response to manipulations of a shift lever, wherein the means controls the speed ratios of the continuously variable transmission set(1) such that a difference in rotational speed between the input clutch member(18a) and the output clutch member(18b) in the clutch unit(17) becomes substantially zero in compliance with the shift lever in neutral.

2. A continuously variable transmission system constructed as defined in claim 1, wherein the control means(60) finds a rotational frequency of the input clutch member(18a) in the clutch unit(17) in accordance with output signals from an engine rpm sensor(58) and the speed ratios of the continuously variable transmission, and further finds a rotational frequency of the output clutch member(18b) in accordance with output signals from a vehicle speed sensor(56).

3. A continuously variable transmission system constructed as defined in claim 1, wherein the continuously variable transmission set is of a toroidal, continuously variable transmission set(1) composed of an input and output disc members(4,7,5,8) confronting each other, a pair of power rollers(6,9) pivoting with respect to the disc members (4,7,5,8) to thereby vary infinitely a rotation of the input disc member(4,7) and transmit the consequent varied rotation to the output disc member(5,8), a pair of trunnions(33,37) supporting the power rollers(6,9), one to each trunnion(33,37), and making it possible to pivot about their pivoting axes, a hydraulic cylinder having two cylinder chambers (43,44) and causing the trunnions(33,37) to shift in a direction of the pivoting axes, a control valve for regulating hydraulic pressures to the cylinders, and a pair of solenoid-operated valves(55) for controlling pilot pressures acting on the opposite ends of the control valve.

# F I G. 1

START

Monitoring of
Vehicle speed V
Accelerator pedal depression $\phi$
Engine rpm Ne — S 1

Detection of selected position — S 2

S 3 — Position = N ?

YES

S 5 — Calculation of desired speed ratio $Rc_N$
$Rc_N = f_N \ (V, \ Ne)$

NO

S 4 — Calculation of desired speed ratio Rc
$Rc = f \ (V, \ \phi, \ Ne)$

END

FIG. 2

# F I G .  3

F I G. 4

```
            ╭─────────────╮
            │   START     │
            ╰──────┬──────╯
                   │
                   ▼
   ┌───────────────────────────────────┐      S 1 0
   │ Detection of                      │
   │ Vehicle speed V                   │
   │ Accelerator pedal depression φ    │
   │ Engine rpm Ne                     │
   └───────────────┬───────────────────┘
                   │
                   ▼
   ┌───────────────────────────────────┐      S 1 1
   │ Calculation of desired speed ratio Rc │
   │      R c = f (V, φ, N e)          │
   └───────────────┬───────────────────┘
                   │
                   ▼
            ╭─────────────╮
            │    END      │
            ╰─────────────╯
```